# EUROPEAN PATENT SPECIFICATION

(11) **EP 1 388 783 B1**
(45) Date of publication and mention of the grant of the patent: **06.02.2008**
(21) Application number: 02017408.2
(22) Date of filing: 02.08.2002
(51) Int. Cl.: G06F 9/44

(54) **Method and computer system for handling incremental data in client-server communication**
Verfahren und Rechnersystem zur Behandlung von inkrementalen Daten in Klient-Server Kommunikation.
Procédé et système ordinateur pour le traitement de données incrémentale dans la communication client-serveur.

(43) Date of publication of application: 11.02.2004
(73) Proprietor: SAP AG, 69190 Walldorf (DE)
(72) Inventor: Moser, Martin, Dr., 69207 Sandhausen (DE)
(74) Representative: Rutetzki, Andreas

(56) References cited:
- INTERNATIONAL BUSINESS MACHINES CORPORATION: "Updating live HTML pages incrementally with data from Web Servers" RESEARCH DISCLOSURE, KENNETH MASON PUBLICATIONS, HAMPSHIRE, GB, vol. 433, no. 95, May 2000 (2000-05), XP007126141 ISSN: 0374-4353
- INTERNATIONAL BUSINESS MACHINES CORPORATION: "Hypertext link navigation with intelligent differential positioning system" RESEARCH DISCLOSURE, KENNETH MASON PUBLICATIONS, HAMPSHIRE, GB, vol. 452, no. 144, December 2001 (2001-12), XP007129499 ISSN: 0374-4353
- LEE K C K ET AL: "INCREMENTAL MAINTENANCE FOR DYNAMIC DATABASE-DERIVED HTML PAGES IN DIGITAL LIBRARIES" PROCEEDINGS OF THE 1998 ACM CIKM INTERNATIONAL CONFERENCE ON INFORMATION AND KNOWLEDGE MANAGEMENT. CIKM '98. BETHESDA, MD, NOV. 3 - 7, 1998, ACM CIKM INTERNATIONAL CONFERENCE ON INFORMATION AND KNOWLEDGE MANAGEMENT, NEW YORK, NY : ACM, US, vol. CONF. 7, 3 November 1998 (1998-11-03), pages 20-29, XP000895348 ISBN: 1-58113-061-9

## Description

### Field of the Invention

The present invention generally relates to electronic data processing, and more particularly, relates to methods, computer program products and systems for client-server communication.

### Background of the Invention

Some software applications can be accessed by a user using a conventional Web browser, such as the Microsoft Internet Explorer. Typically, such applications provide a plurality of pages. A page includes relevant information for a graphical user interface (GUI) through which the user can interact with the application. The page can include multiple components. The page is typically generated on a server and then transmitted to a client. At the client, the page is visualized for a user by the browser. When the user interacts with the client via the GUI to refresh the page, the whole process is repeated. The generally accepted programming design pattern for the above described procedure is the so called MVC (Model-View-Controller) design pattern. The model, which encapsulates application data for viewing and manipulating, is manipulated by the controller and is rendered into the view. The view corresponds to a page that includes browser-compatible content. There can be multiple views and controllers for each model. For example, one view can be used to visualize data of the model as a table, while another view can be used to visualize the same data as a pie chart. All this is done on the server and the complete view is then sent to the client. Therefore, the MVC design pattern requires multiple CPU cycles and a high bandwidth of the computer network that enables communication between the client and the server because the whole page (layout information and data) is regenerated on the server and the resulting View is retransmitted from the server to the client over the network. Further, the user is confronted with undesired effects, such as waiting time and screen flicker, until the refreshed page is finally presented on the client.

Some conventional browsers, such as the Microsoft Internet Explorer IE 6.0, include a feature for flicker-free rendering. When the client receives a modified page, the browser identifies modified components of the page and only replaces these components instead of the whole page, for example, by dynamic HTML injection into the page's document object model (DOM). This leads to a reduction of screen-flicker for the user but still consumes CPU time (CPU cycles) for page generation and further requires bandwidth for transmission of the whole page from the server to the client. Further, each user interaction with the client requires a server round trip and, therefore, causes high server load due to page generation and transmission.

There is an ongoing need to reduce CPU time consumption and bandwidth requirements in client-server communication and to reduce undesired effects for the user at the same time.

International Business Machines Corporation: "Updating Live HTML Pages Incrementally With Data From Webservers" Research Disclosure, Kenneth Mason Publications, Hampshire, GB. Vol. 433, No. 95, May 2000 discloses a method for updating live HTML pages, wherein, when updating an HTML page not the entire code and content of said HTML page is sent to the browser.

In document Lee K. et al.: "Incremental Maintenance For Dynamic Database-Derived HTML Pages In Digital Libraries", Proceedings of the 1998 ACM CIKM International Conference on Information and Knowledge Management. CIKM-98, Bethesda, MD, November 3-7, 1998, ACM CIKM International Conference on Information and Knowledge Management, New York, NY: ACM, US, Vol. Conf. 7, 3 November 1998, pages 20 to 29, XP 000895348 ISBN: 1-58113-061-9 a method for incrementally updating a materialized view in a web environment is disclosed wherein a snapshot of the view at a particular reference time including view changes since the last update is displayed.

### Summary of the Invention

Therefore, it is an objective of the present invention to provide methods, computer program products and computer systems to reduce bandwidth requirements in client-server communication when refreshing pages.

To meet this objective, in one embodiment of the present invention a computer system for handling incremental data according to claim 1 provides the following features:
a) a server-controller on a server receives a modification-request of a client and, in response to the modification-request, modifies an original model of an application component that is stored on a server into a modified model of the application component;
b) a server-renderer generates at least one browser-increment that corresponds to the difference between the original model and the modified model;
c) a client-assembler receives the at least one browser-increment from the server and updates an original document object model (DOM) component at the client with the at least one browser-increment. The original DOM component corresponds to the original model and the update results in a modified DOM component that corresponds to the modified model;
d) the modification-request is generated by a client-controller.

Further embodiments of the invention are a server according to claim 10, a client according to claim 11, a server-side method according to claim 15, a client-side method according to claim 16, a server-side computer program product according to claim 20 and a client-side computer program product according to claim 21.

In a preferred embodiment, the client-controller (100-2) instructs the client-assembler (100-1) to reset the original or modified DOM component (300-T1, 300-T2) upon receiving a reset-request.

When compared to the prior art MVC-pattern, where model, view and controller are stored and processed by the server, the present invention uses a pattern where the view and the controller are split into server-side and client-side portions. The server-side portion of the view is the server-renderer. The client-side portion of the view is the client-assembler. The server-side portion of the controller is the server-controller and the client-side portion of the controller is the client-controller.

It is an effect of the present invention that the required bandwidth for network communication is lower when compared to prior art systems where the whole page is exchanged between the server and client instead of a browser-increment. Often only a minor portion of the page is modified. In this case the browser-increment transmission requires significant less bandwidth than the whole page transmission.

It is a further effect of the present invention that a user who interacts with the client experiences an eye pleasing effect because the update of a browser component's DOM component with a browser-increment results in a flicker-free change of the graphical user interface.

It is a further effect of the present invention that the server does not need to hold the state of an application because the server receives the state information it needs from the client.

The aspects of the invention will be realized and attained by means of the elements and combinations particularly pointed out in the appended claims. Also, the described combination of the features of the invention is not be understood as a limitation, and all the features can be combined in other constellations. It is to be understood that both, the foregoing general description and the following detailed description are exemplary and explanatory only and are not restrictive of the invention as described.

### Brief Description of the Drawings

- FIG. 1: illustrates a simplified block diagram of an exemplary computer system that implements embodiments of the present invention;
- FIGS. 2A to 2D: illustrate an implementation of a graphical user interface according to one embodiment of the present invention;
- FIG. 3: illustrates interaction of a client with a server when operated according to one embodiment of the invention;
- FIGS. 4A, 4B: illustrate details of client-side handling of a browser-increment in one embodiment of the invention;
- FIG. 5: illustrates two complementary computer program products and their main functional blocks that may be used in one embodiment of the present invention;
- FIG. 6: illustrates a simplified flowchart of a server-side method for handling incremental data according to the invention; and
- FIGS. 7A, 7B: illustrate a simplified flowchart of a client-side method for handling incremental data according to the invention.

### Detailed Description of the Invention

Wherever possible, the same reference numbers will be used throughout the drawings to refer to the same or like parts.

Definitions of terms, as used herein after:

### Client:

A client is a computer device configured to access a service that, for example, is provided by a software application. Typically, clients for accessing Web applications run Web browsers such as Netscape Navigator running on a PC, Pocket Internet Explorer running on a PDA, or a WAP browser running on a cell phone.

### Server:

A server is a computer device that is running the application which is accessed by the client.

### Page:

A page includes content (layout and data) that defines a graphical user interface of a Web application (see definition below). A page typically is rendered on the server into a browser compatible format, such as HTML or WML.

### Component:

A component is a basic building block of a page. The component always exists within a page. A component can include further components. In this case, the component is referred to as "parent-component" and the further components are referred to as "child-components". A component of a page that has no parent-component within the page is referred to as root component. According to the invention a component has a server-side portion that is also referred to as "application component". The application component exists during the generation of a component descriptor and a browser-increment. This allows one to have a stateless server because the application component can exist for a limited time interval only and receive necessary state information from a client. The component also has a client-side portion that will be referred to as a browser component. The browser component holds the state of the corresponding component.

### Component descriptor:

When a page is rendered into a browser-compatible format, each application component of the page is rendered into the browser-compatible format. A rendered application component is referred to as "component descriptor". A component descriptor can be implemented as name-value pair.

### Web Application:

A Web application, as used hereinafter, includes a set of pages. One specific feature of a Web application is that it keeps no state at the server. In other words, for each request the server receives it creates a state of the accessed Web application from scratch. After the Web application has generated an output, usually the state is discarded.

### Document object model:

According to the corresponding W3C definition, the Document Object Model (DOM) of a page provides a mechanism to access and manipulate parsed HTML and XML content.

### Class name:

A class name of a component specifies the name of a server-side component class (e.g., Java class, Java Server Pages class, servlet class, Pascal class, C class, C++ class, or Business Server Pages class) that implements the application component of the component. The application component is an instance of the component class that can include a corresponding model, server-controller and server-renderer.

### Script class name:

The script class name of a component specifies the name of a client-side component script class (e.g., JavaScript class, Java Applets class, or VisualBasic Script class) that implements a browser component that corresponds to an application component. The component script class and the component class can have identical hierarchies. The browser component is an instance of the component script class and can include a corresponding client-controller, client-assembler and DOM component of the current page. A DOM component can include one ore more DOM nodes that are used by the browser visualize the corresponding component.

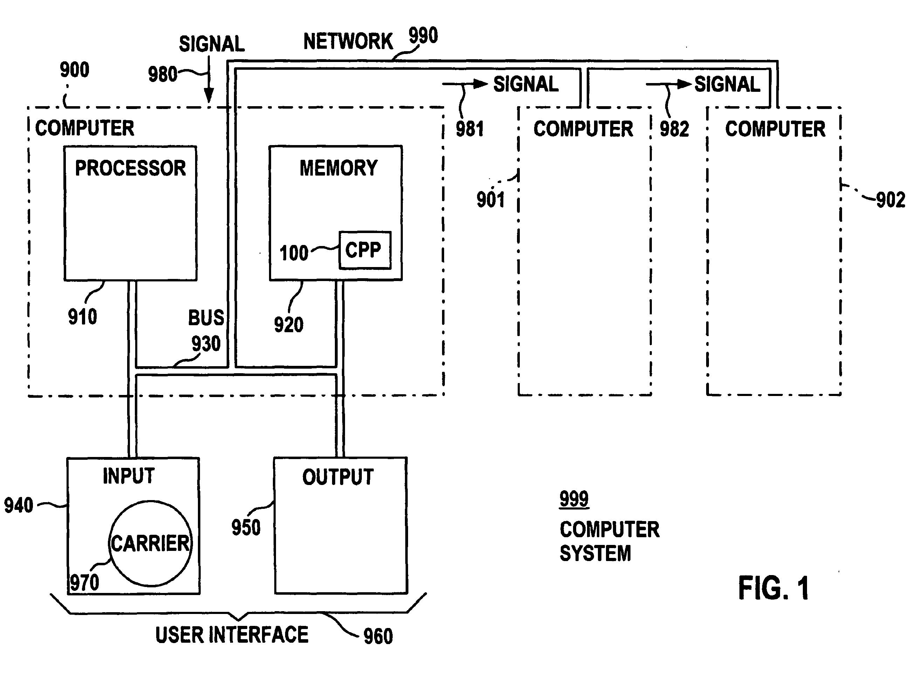

FIG. 1 is a simplified block diagram of an exemplary computer system that implements embodiments of the present invention. Computer system 999 includes computer 900 and has a plurality of further computers 901, 902 (or 90q, with q=0...Q-1, Q any number).

Computer 900 can communicate with further computers 901, 902 over computer network 990. Computer 900 has processor 910, memory 920, bus 930, and, optionally, input device 940 and output device 950 (I/O devices, user interface 960). As illustrated, the invention is implemented by computer program product 100 (CPP), program carrier 970 or program signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop or hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), a digital signal processor (DSP), or the like.

Memory 920 symbolizes elements that temporarily or permanently store data and instructions. Although memory 920 is illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, magnetic storage media, optical storage media, semiconductor storage media or by any other computer readable storage media.

Memory 920 can store support modules such as, e.g., a basic input output system (BIOS), an operating system (OS), a program library, a compiler, an interpreter, or a text processing tool.

CPP 100 implements program instructions and - optionally - data that cause processor 910 to execute method steps of the present invention. In other words, CPP 100 can control the operation of computer 900 so that it operates in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture embodying a computer readable medium having computer readable program code that can be used to cause a computer to perform methods of the present invention. Further, program signal 980 can also embody CPP 100.

Input device 940 provides data and instructions for processing by computer 900. Device 940 can be, for example, a keyboard, a pointing device (e.g., mouse, trackball, cursor direction keys), microphone, joystick, game pad, scanner or disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 presents instructions and data that have been processed. For example, this can be a monitor or a display, e.g., a cathode ray tube (CRT) or flat panel display or liquid crystal display (LCD), a speaker, printer, plotter or vibration alert device. Similar as above, output device 950 can communicate with the user, but it can also communicate with further computers.

Input device 940 and output device 950 can be combined to a single device. Any device 940 and 950 can be optionally provided.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional).

Networks (as network 990) are commonplace in offices, enterprise-wide computer networks, intranets and the internet. Network 990 can be a wired or a wireless network. Examples of network implementations can be local area networks (LAN), wide area networks (WAN), public switched telephone networks (PSTN) and Integrated Services Digital Networks (ISDN). Other examples of network implementations are known in the art.

A variety of transmission protocols and data formats are known, for example, transmission control protocol/internet protocol (TCP/IP), hypertext transfer protocol (HTTP), secure HTTP (HTTPS) or wireless application protocol (WAP).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases such as "the computer provides" and "the program provides" are convenient abbreviation to express actions by a computer that is controlled by a program.

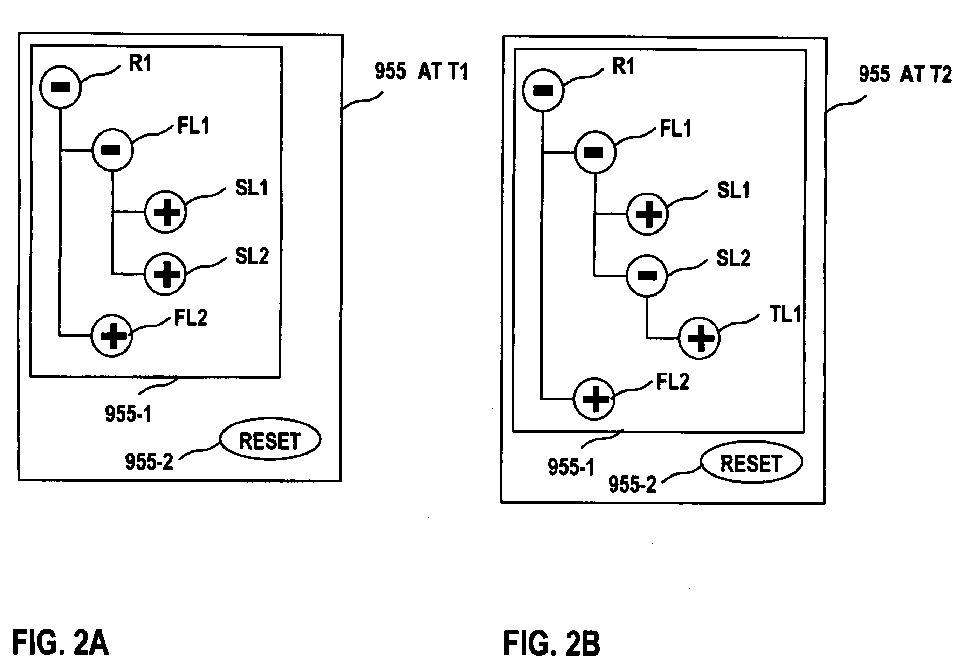

FIGS. 2A to 2D illustrate an implementation of a graphical user interface 955 according to one embodiment of the present invention at four consecutive time points T1, T2, T3 and T4.

The following example of a user's interaction with graphical user interface 955 is used throughout the description to further explain the present invention. However, any graphical user interface can be implemented according to the present invention. For example, GUI 955 is presented to the user on output device 950 (cf. FIG. 1) of client computer 900 (cf. FIG. 1) and the user interacts with GUI 955 using input device 940.

GUI 955 is a graphical user interface that allows the user to interact with hierarchical data that are visualized by nodes of tree 955-1. For example, the hierarchical data is stored on server computer 901 (cf. FIG. 1). However, the data can be stored on any storage device of computer system 999 (cf. FIG. 1). The user can also reset tree 955-1 by using RESET (button) 955-2. The state of each node of tree 955-1 is indicated by a minus sign (-) or a plus sign (+). The minus sign indicates that the status of a node is expanded. The plus sign indicates that the status of a node is collapsed. For example, by clicking on a node, the user can change the status of the node from collapsed (+) to expanded (-) or vice versa.

In FIG. 2A, at T1, the user gets prompted with tree 955-1, wherein the states of the various nodes are:
root-node R1: expanded (-) ; child nodes FL1, FL2;
first level node FL1: expanded (-); child nodes: SL1, SL2;
first level node FL2: collapsed; and
second level nodes SL1, SL2: collapsed (+).

For example, the user selects second level node SL2 for expanding (e.g., by clicking on the node). After having received the selection of the user, tree 955-1 is changed accordingly.

In FIG. 2B, at T2, the status of second level node SL2 has changed to: expanded (-); child node TL1. Third layer node TL1 is added to tree 955-1 as a child-node of second layer node SL2. Then, for example, the user again selects second level node SL2 for collapsing (e.g., by clicking on the node). After having received the selection of the user, client 900 changes tree 955-1 accordingly.

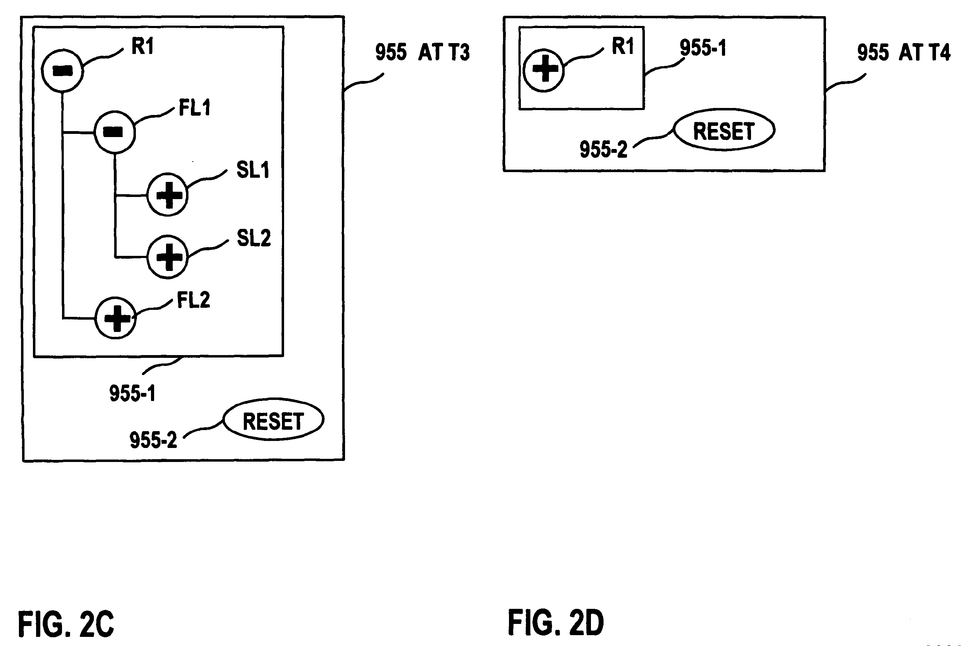

In FIG. 2C, at T3, the status of second level node SL2 has changed back to: collapsed (+). Third layer node TL1 is hidden in tree 955-1 and not visible as a child-node of second layer node SL2. For example, the user then clicks on RESET button 955-2 to reset tree 955-1 to its initial state. After having received the RESET request, client 900 changes tree 955-1, accordingly.

FIG. 2D, at T4, shows an example of the initial state of tree 955-1. Root-node R1 has status collapsed (+) and none of its child nodes is visualized. An alternative initial state of tree 955-1 is: root-node R1 expanded (-) ; child nodes: FL1, FL2 collapsed (+). Another alternative initial state is: all nodes expanded (+). In the following description, embodiments of the invention are disclosed to implement a GUI behaviour as described under FIGS. 2A to 2D with low network bandwidth requirements and reduced screen-flicker for the user when the appearance of GUI 955 changes at, before or after the time points T1 to T4.

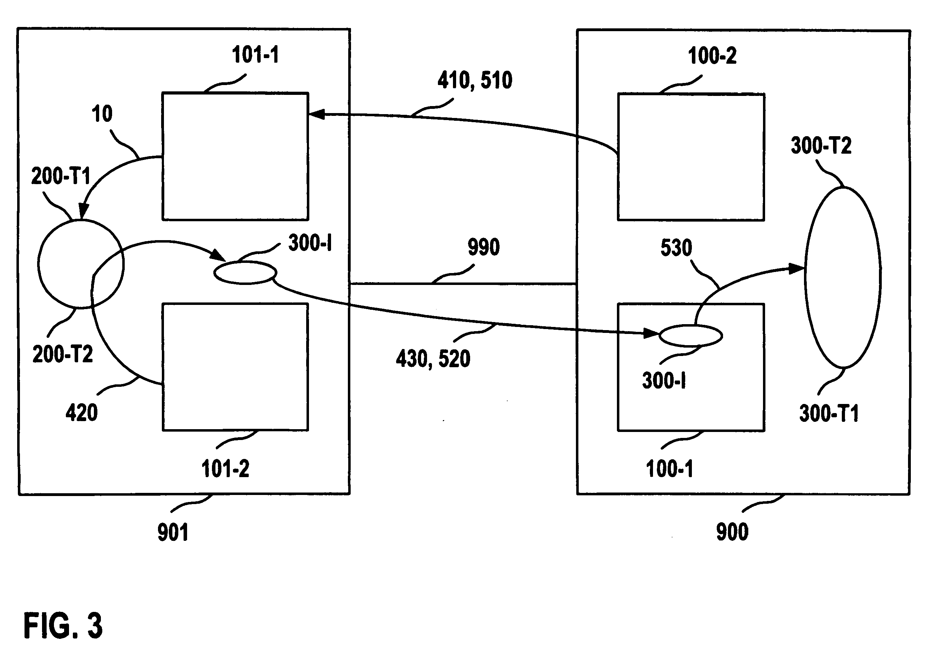

FIG. 3 illustrates interaction of client 900 with server 901 when operated according to one embodiment of the present invention. As described in FIG. 1 client 900 communicates with server 901 over network 990.

Server 901 includes an application component that has server-controller 101-1, server-renderer 101-2. In the example, an instance of the application component further includes original model 200-T1. For example, server-controller 101-1 and server-renderer 101-2 are portions of CPP 101 (cf. FIG. 1) that is stored in memory 921 of server 901. Server-controller 101-1 receives 410 a modification-request of client 900. Upon receiving the modification-request, server-controller 101-1 modifies 10 original model 200-T1 into modified model 200-T2. In case of multiple application components, corresponding server-controllers let the application components influence each other. In other words, for example, server-controller 101-1 can raise an event that makes a further server-controller modify a further model.

Original model 200-T1 and modified model 200-T2 of the application component are illustrated by the same circle symbol. Referring back to the example of FIG. 2A, original model 200-T1 is visualized as tree 955-1 at T1. The modification-request corresponds to the user's interaction to expand second level node SL2. Modified model 200-T2 is visualized as tree 955-1 at T2.

One embodiment of the invention uses an object-oriented component architecture framework (also referred to as framework hereinafter) with inheritance. The framework has a server-side portion and a client-side portion. The framework can be implemented as a function pool, such as a set of methods of one or more classes. For example, components implement standard graphical user interface elements such as buttons (e.g., RESET 955-2), trees (e.g., tree 955-1), tables, tab strips or any other interface element in a graphical user interface, such as GUI 955. Further, a component can have properties and offers services, such as graphical user interface creation from a graphical user interface description file, drag and drop interaction handling, and component administration. The framework supports component creation and deletion at runtime, as well as access to all properties of a component at runtime. Additionally, the framework can provide general services, such as a broadcasting event mechanism, modification of the graphical user interface, and server access without page replacement.

A component can be installed without a special registration procedure similar to a procedures used by servlet engines, such as Tomcat. In other words, installing a component automatically makes the component available to the framework.

For example, an application component of a component is defined by a component class, such as a Java class, a Java Server Pages class, a servlet class, a Pascal class, a C class, a C++ class or a Business Server Pages class. The component class runs on server 901. For example, the component class implements the model (e.g., model 200-T1) as well as the server-renderer (e.g., server-renderer 101-2) and the server-controller (e.g., server-controller 101-1) of the component.

For visualizing original model 200-T1 server-renderer 101-2 generates browser-compatible code, such as HTML, XHTML or WML. Initially, server-renderer 101-2 generates a component descriptor from original model 200-T1 and sends the component-descriptor to client 900. The component descriptor corresponds to a browser-compatible description of tree 955-1 in the example of FIG. 2A (at T1). Those skilled in the art know how to generate the component descriptor, for example on the base of a Java page, a Java Server Page or alternative server-side descriptions of original model 200-T1. For example, a component script class, such as a JavaScript class, a JavaApplets class or a VisualBasic Script class, generates original browser component 300-T1 based on the corresponding component descriptor of original model 200-T1.

In one embodiment, components include properties as a set of name-value-pairs, wherein the properties are part of a corresponding component descriptor. Standard properties of a component are: an identifier, a class name, a script class name and a parent component name. The identifier is unique on a page that includes the component. The class name and the script class name specify the names of the component class and the component script class of the component. The parent component name is the identifier of the parent component of the component. For example, the script class name can be derived from the class name. The script class can be used to create a browser component that corresponds to the application component of the component.

When a page is initially generated on server 901, the component class of each application component of the page is called with the corresponding properties of the application component. The properties include all information about the application component that is known on server 901. The component class writes a component-descriptor of the application component to the page by using, for example, one or several functions of the interface of the component class. Examples of these functions are:
- prolog(...)
- base (...)
- epilog(...)

In the example, all three functions have a set of parameters. For example, a parameter "properties" is a set of name-value pairs describing the application component. A further parameter "output" is used to write data into the page, wherein the data is sent to the client in an output stream. Writing data to a page that is sent to the client in an output stream will also be referred to as writing or rendering data to the output stream.

Function prolog(...) writes a component descriptor header to the output stream. The component descriptor header is a browser compatible description of name-value pairs describing the application component.

Function base(...) renders base content of the component to the output stream. The base content is defined as the initial content of a component that is presented to the user. The framework is able to combine the base contents of multiple components within a page. This results in a description of GUI 955. For example, the base content of a component includes further name-value pairs, such as a content name-value pair that is a browser compatible description of the initial content of the component or a reference to the initial content that is presented to the user. A type specification name-value pair can describe a reference type to the initial content. For example, if the type specification name-value pair includes "HTML", then the corresponding content name-value pair contains the initial content as an HTML string. Examples for other reference types are DOM", "WML" and "link" (link to another page).

In case the type specification name-value pair includes reference type "DOM", the content name-value pair includes a unique identifier of a corresponding DOM node of the page. For example, at page generation time, server 901 can generate HTML code into the page, where the HTML code has an ID attribute that includes the unique identifier of the DOM node as the value of the ID attribute. The same applies to other reference types.

Function epilog(...) writes client-side script to the output stream to register the component with the framework.

Some functions for writing the component descriptor to the output stream can be handled by a super-class of the component class. In other words, a super-class can write properties that are the same for a plurality of components (e.g., class property) to the output stream. The component class, which is a subclass of the super-class, can add properties of a specific component to the corresponding output stream.

The following coding block is a simplified HTML code example of a component descriptor of a tree component:

```
     <table id='node'>
       <tr><td>id</td><td>node</td></tr>
       <tr><td>parent</td><td>parentContainer</td></tr>
       <tr><td>Class</td><td>SPNode</td></tr>
       <tr><td>positionX</td><td>0</td></tr>
       <tr><td>positionY</td><td>0</td></tr>
       <tr><td>Width</td><td>82</td></tr>
       <tr><td>Height</td><td>25</td></tr>
       ...
       <tr><td>contentType</td><td>HTML</td></tr>
       <tr><td>content</td><td><HTML-string of node
                               base content></td></tr>
       ...
     </table>
     <script language='JavaScript'>
       SPFramework.registerComponent('node', 'SPNode');
     </script>
```

The table-portion of the coding block includes the component descriptor header (e.g., identifier, parent, class, positionX, positionY, Width, Height) generated by, for example, function prolog() and further includes the component's base content (e.g., contentType, content) generated by, for example, function base(). Referring back to the example of FIG. 2A, the component descriptor corresponds to a description of tree 955-1 at T1.

The JavaScript portion of the coding block can be generated by function epilog().

When client-controller 101-1 modifies 10 original model 200-T1 into modified model 200-T2, server-renderer 101-2 generates 420 at least browser-increment 300-I in a browser-compatible format. Depending on the modification 10, more than one browser-increment can be generated by server-renderer 101-2. In the example, browser-increment 300-I corresponds to the difference between original model 200-T1 and modified model 200-T2. Referring back to the example of FIG. 2B, browser-increment 300-I corresponds to third level node TL1. Server 901 then sends 430 at least browser-increment 300-I to client 900.

For example, the interface of the component class has a further function increment(...). Function increment (...) can have parameters "properties" and "output", which can be the same as for the previously explained functions of the interface. It can have a further parameter "parameters", which is a further set of name-value pairs similar to parameter "properties". Function increment () can be called when a user interaction (e.g., when the user indicates to expand second level node SL2) that affects the model of the application component (e.g., original model 200-T1) requires a change in at least one part of the corresponding browser component for its visualization. Function increment() has the task to generate 420 a corresponding browser-increment (e.g., browser-increment 300-I), and write it to the output stream. The name-value pairs provided with parameter "parameters" specify the exact format of the browser-increment to be generated.

Referring back to the example of FIG. 2B, an HTML example of browser-increment 300-I can include the following statement:

```
     <div id='/R1/FL1/SL2/TL1'>node label</div>.
```

The identifier '/R1/FL1/SL2/TL1' describes the path of the browser-increment which corresponds to third level node TL1 at T2. The node label can be an icon (e.g., "+" in a circle) that visualizes the node or a text or any other graphical representation.

In an alternative embodiment, a single function (e.g., function all_in_one (...)) or any other number of functions can be used to perform the previously described tasks that are needed to write the corresponding data to the output stream.

To summarize, in one embodiment of the invention, the server-side component class has two tasks:
a) On request, write a component descriptor to the output stream, wherein the component descriptor lists all component properties. Further, generate the component base content and write it to the output stream. Further, write code to the output stream that registers the component with the framework.
b) On request, generate a browser-increment, as described by the parameters. Write the browser-increment to the output stream.

Client 900 includes a browser component which corresponds to the application component and that has corresponding client-assembler 100-1 and client-controller 100-2. For example, client-controller 100-2 and client-assembler 100-1 are portions of CPP 100 (cf. FIG. 1) that is stored in memory 920 of client 900. An instance of the browser component (e.g., a JavaScript object) is instantiated from the corresponding component script class. For example, the client-side portion of the framework uses a constructor that receives a pointer to the component descriptor. The browser component extracts properties and corresponding property values from the component descriptor and adds them to the instance of the browser component. The instance of the browser component includes original DOM component 300-T1.

After original model 200-T1 has been modified, client-assembler 100-1 receives 520 browser-increment 300-I and updates 530 original DOM component 300-T1 (that corresponds to original model 200-T1) with the at least browser-increment 300-1. This results in modified DOM component 300-T2 that corresponds to modified model 200-T2. Modified DOM component 300-T2 and original DOM component 300-T1 are illustrated by the same ellipse. For example, modified DOM component 300-T2 and original DOM component 300-T1 are instances (e.g., JavaScript objects) of the corresponding component script class. In one embodiment of the invention, the component script class that corresponds to the component class of a component is running at client 900 and implements, for example, client-assembler 100-1 and client-controller 100-2. For example, the interface of client-assembler 100-1 includes function handleResponse(...).

In one embodiment of the invention function handleResponse() is called, when client-assembler 100-1 receives 520 browser-increment 300-I from function increment() of the component class. For example, the framework passes parameter "output" of function increment() to a parameter "response" of function handleResponse(). Further parameter "target" of function handleResponse() is a value that is passed to server 901 in the receiving 410 step. When function handleResponse() is called upon having received 520 browser-increment 300-I, parameter "target" indicates to the client the recipient (browser component) of browser-increment 300-I. The recipient can be the same as the original requestor but can also be different from the original requestor.

A first example to retrieve browser-increment 300-I from server 901 is by using a script tag. A second example is by using a hidden HTML iFrame element.

To retrieve a browser-increment by using a script tag (e.g., JavaScript), the client-side portion of the framework performs the following steps.

First, a corresponding request URL is generated. For example, the client-side portion of the framework retrieves a server generated basic request URL from the page received from the server and appends request specific parameters.

Then a script tag (e.g., stag) is generated that has a SCR attribute. For this, for example, one can use a JavaScript statement, such as:

```
     var stag = createNode("script").
```

Then the request URL is assigned to the SRC attribute of the script tag (stag.SRC = request URL).

Then the script tag is added to the DOM of the page. For example, this can be achieved by using the JavaScript statement document .body.appendChild(stag).

Once the script tag is added to the DOM, the client sends the server request to the server. The server generates a script statement that includes the response to the request. For example, the server can create a call to the client-side portion of the framework, passing the results of the server request as a parameter:

```
     Framework.handleResponse(result)
```

The function handleResponse (...) interprets the result at the client and passes the result for each component to the corresponding components.

Other scripting languages, such as VBScript, can be equally be used to implement browser-increment retrieval using script tags.

The second example uses iFrames instead of script tags for browser-increment retrieval. In this example the page received from the server includes a hidden iFrame that is generated into the page by the server-side portion of the framework. The client-side portion of the framework then generates a corresponding request URL as described in the first example.

Then, the request URL is assigned to the SRC attribute of the hidden iFrame.

Once the request URL is assigned to the SRC attribute, the client sends the corresponding request to the server. The server can generate a script as described in the first example, or it can generate a description of what actions are required at the client. In the latter case, the client-side framework interprets the description and acts accordingly.

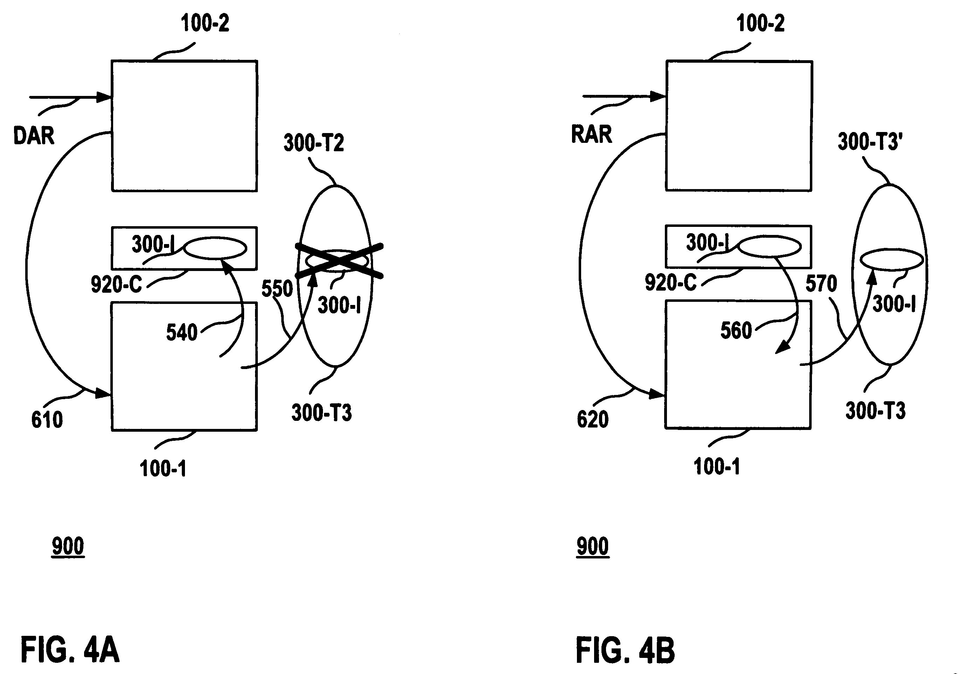

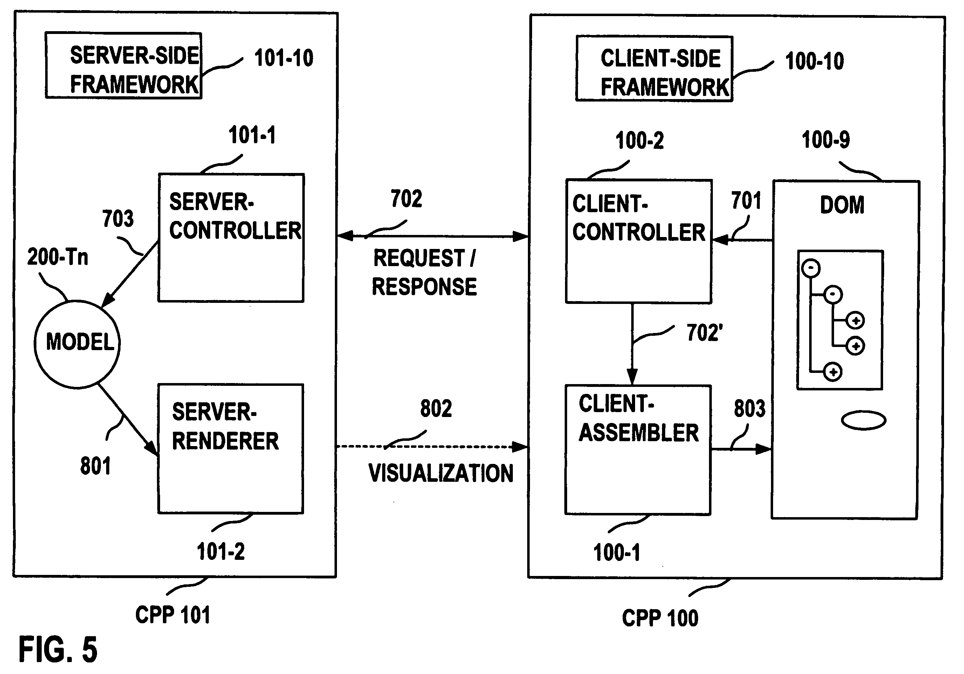

When client-assembler 100-1 notices that an update of the browser component is requested (e.g., through user interaction), client-controller 100-2 generates the modification-request that is sent 510 to server 901. Further functions of client-controller 100-2 are explained in FIGS. 4A, 4B and FIG. 5.

When sending only browser-increment 300-I instead of the whole modified browser component from server 901 to client 900, less bandwidth is required for the client-server communication over network 990 and less CPU time of the server is consumed for generating browser-increment 300-I than for regenerating the full page.

When original DOM component 300-T1 is updated with browser-increment 300-I through client-assembler 100-1, screen-flicker which often occurs when replacing a full page, is reduced.

FIGS. 4A, 4B illustrate further details of client-side handling of browser-increment 300-I in one embodiment of the invention. Preferably, upon having received 520 browser-increment 300-1, client-controller 100-2 stores browser-increment 300-I in cache-memory 920-C of the client 900.

FIG. 4A illustrates the deactivation of browser-increment 300-I upon receiving deactivation-request DAR. Deactivation-request DAR can be generated by the user interacting with client 900 as described in FIGS. 2A, 2B or it can be generated by another computer in computer system 999. For example, deactivation-request DAR is received by client-controller 100-2. Then, client-controller 100-2 instructs 610 client-assembler 100-1 to deactivate 550 browser-increment 300-I in modified DOM component 300-T2 resulting in deactivated DOM component 300-T3. For example, browser-increment 300-I can be deactivated by setting a corresponding deactivation flag. In deactivated DOM component 300-T3, browser-increment 300-I is suppressed (e.g., by deletion or setting a deactivation flag; illustrated by crossing out). Modified DOM component 300-T2 and deactivated DOM component 300-T3 are illustrated by the same ellipse. Referring back to the example of FIGS. 2B, 2C, modified DOM component 300-T2 corresponds to tree 955-1 at T2 where second level node SL2 is expanded and third level node TL1 is included. Deactivated DOM component 300-T3 corresponds to tree 955-1 at T3 where third level node TL1 is suppressed and second level node SL2 is collapsed. Although the visualization of tree 955-1 at T1 is identical with its visualization at T3, the status of client 900 at T1 is different from the status at T3 because client-increment 300-I is available in cache 920-C at T3 but not at T1. This affects the behaviour of client 900 in case of a reactivation-request as explained in reference to FIG. 4B.

For example, browser components can interact at client 900 without contacting server 901. Referring back to the example of FIG. 2D, at T4, the user has used RESET button 955-2 generating a reset-request to collapse tree 955-1 to root-node R1. Correspondingly, at client 900, a RESET browser component (not shown) that corresponds to a RESET application component (not shown) at server 901, interacts with the browser component visualizing tree 955-1 so that all further browser-increments (not shown) of the browser component are deactivated in the corresponding DOM component (e.g., deactivated DOM component 300-T3) with the exception of a browser-increment that corresponds to root-node R1.

FIG. 4B illustrates the reactivation of browser-increment 300-I upon client-controller 100-2 receiving reactivation-request RAR. Client-controller 100-2 retrieves browser-increment 300-I from cache-memory 920-C and instructs 620 client-assembler 100-1 to reactivate browser-increment 300-I in deactivated DOM component 300-T3. The reactivation results in reactivated DOM component 300-T3'. Referring back to the example of FIG. 2A, the user interacts with client 900 in the same way as at T1. However, instead of requesting browser-delta 300-I from server 901 to arrive at modified DOM component 300-T2 that corresponds to the visualization of tree 955-1 at T2, client 900 simply retrieves browser-increment 300-I from its own cache 902-C and reactivates 570 browser-increment 300-I in deactivated DOM component 300-T3. The resulting reactivated DOM component 300-T3' is identical with modified DOM component 300-T2.

By caching browser-increments at client 900 and enabling interaction of browser components at client 900, the load of server 901 is reduced because the number of requests to the server is reduced, as the client 900 can handle specific events on its own without contacting server 901.

FIG. 5 illustrates two complementary computer program products CPP 101 (server program), CPP 100 (client program) and their main functional blocks that may be used in one embodiment of the present invention. For example, CPP 100 can be a browser.

The framework is implemented in server-side portion 101-10 as a part of CPP 101 and in client-side-portion 100-10 as a part of CPP 100. As explained earlier, the framework provides generic functions that can be applied to multiple components.

DOM 100-9 is used to present the graphical user interface of an application to the user. In the example, DOM 100-9 represents a page including tree-component 955-1 (cf. FIG. 2A) and reset component 955-2 (cf. FIG. 2A). When the user interacts with CPP 100 (e.g., by indicating that a specific tree node should be expanded) so that model 200-Tn (n= 1,2, ...,N) at server 901 will be affected, corresponding client controller 100-2 gets notified 701 about the user interaction and sends 702 a corresponding request to CPP 101 running on server 901. For example, client-controller 100-2 can subscribe to specific browser events and is notified when a corresponding browser event is raised through the user interaction.

In case the user interaction can be handled by client-controller 100-2 without contacting server 901, client-controller 100-2 can instruct 702' corresponding client-assembler 100-1 to update 803 DOM 100-9 of the page that is currently visualized by the browser for adjusting the visualization of DOM 100-9 according to the user interaction.

In case the user interaction requires server 901 to be involved, CPP 100 sends 702 a corresponding request to CPP 101. The request makes server-controller 101-1 to modify 703 the corresponding model 200-Tn accordingly. Server-renderer 101-2 renders/generates 801 model 200-Tn after having been modified 703. The result of the rendering 801 is a description of the model that can be used for its visualization. This description is then sent to client 900.

In one embodiment of the invention, the description is sent 802 from server-renderer 101-2 to client-assembler 100-1. Client-assembler uses the description to update 803 DOM 100-9 accordingly by changing a corresponding node of DOM 100-9.

In another embodiment of the invention the description can be sent 702 from server-controller 101-1 to client-controller 100-2, which then instructs 702' client-assembler 100-1 to update 803 DOM 100-9 accordingly.

In a still further embodiment of the invention, the description is sent from server-side framework 101-10 to client-side framework 100-10, where it is dispatched to the corresponding client-controller 100-2.

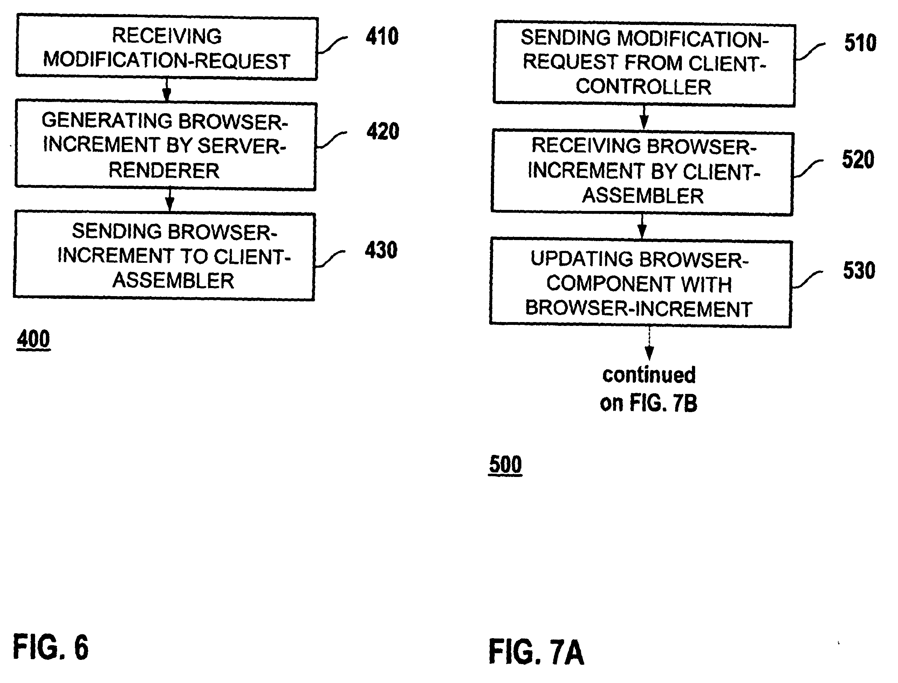

FIG. 6 summarizes server-side aspects of the invention by a simplified flowchart of server-side method 400 that can be performed by one embodiment of the invention. For example, method 400 for handling incremental data on server 901 in computer system 999 can be performed by computer program product 101 having instructions that, when loaded into memory 921 of server 901, cause at least one processor 911 of server 901 to execute method 400. Method 400 includes the steps receiving 410, generating 420 and sending 430.

In the receiving step 410, server-controller 101-1 receives a modification-request from client-controller 100-2. Client-controller 100-2 is running on client 900 of computer system 999. The modification-request makes server 901 modify original model 200-T1 into modified model 200-T2, which are both stored, for example, in memory 921 of server 901.

In the generating step 420, server-renderer 101-2 generates at least one browser-increment 300-I that corresponds to the difference between original model 200-T1 and modified model 200-T2.

In the sending step 430 server 901 sends the at least one browser-increment 300-I to client-assembler 100-1 of client 900. Client 900 uses browser-increment 300-I to update original DOM component 300-T1 with the at least one browser-increment 300-I. The update results in modified DOM component 300-T2 that corresponds to modified model 200-T2, whereas original DOM component 300-T1 corresponds to original model 200-T1.

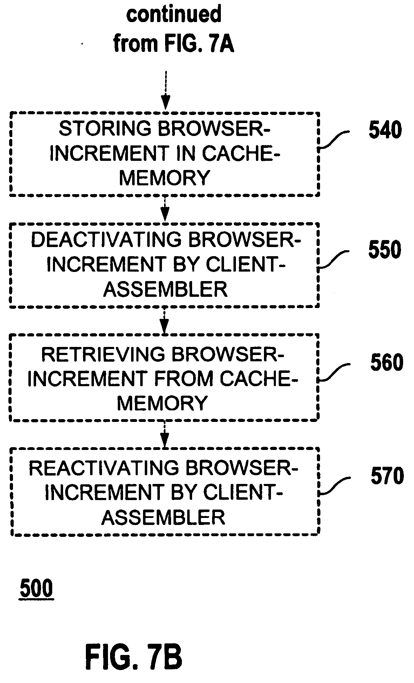

FIG. 7A summarizes client-side aspects of the invention by a simplified flowchart of client-side method 500 that can be performed by one embodiment of the invention. For example, method 500 for handling incremental data on client 900 in computer system 999 can be performed by computer program product 100 having instructions that, when loaded into memory 920 of client 900, cause at least one processor 910 of client 900 to execute method 500. Method 500 includes the steps sending 510, receiving 520 and updating 530.

In the sending step 510, client-controller 100-2 sends a modification-request to server-controller 101-1. Server-controller 101-1 is implemented on server 901 of computer system 999.

In the receiving step 520, client-assembler 100-1 receives at least one browser-increment 300-I from server 901 as a response to the modification request.

In the updating step 530, client-assembler 100-1 updates original DOM component 300-T1 with the at least one browser-increment 300-I resulting in a modified DOM component 300-T2. Original DOM component 300-T1 corresponds to original model 200-T1 and modified DOM component 300-T2 corresponds to modified model 200-T2.

FIG. 7B continues the simplified flowchart of FIG. 7A. The steps illustrated by dashed squares can be performed by method 500 in various embodiments of the invention. The steps do not necessarily require steps 510 to 530 to be performed before. In case of using an alternative basis mechanism for handling of incremental data, the steps illustrated in FIG. 7B can still be used for client-side event-handling.

In a deactivation example, method 500 includes the further steps storing 540 and deactivating 550.

In the storing step 540, client 900 stores the at least one browser-increment 300-I in its cache-memory 920-C.

In the deactivating step 550, client-controller 100-2 has received deactivation-request DAR and, as a consequence, client-assembler 100-1 deactivates browser-increment 300-I in the corresponding DOM component.

In a reactivation example, of the invention method 500 includes the further steps retrieving 560 and reactivating 570. However, it does not require to execute the deactivation step 550 before.

In the retrieving step 560, client 900 retrieves the at least one browser-increment 300-I from cache-memory 920-C, where it was stored using storing step 540. For example, this can be initiated by reactivation-request RAR that is received by client-controller 100-2.

Then, in the reactivating step 570, client-assembler 100-1 reactivates browser-increment 300-I in the corresponding DOM component.

## Claims

1. A computer system (999) for handling incremental data comprising:
a server-controller (101-1) for receiving a modification-request from a client (900) to modify an original model (200-T1) of an application component that is stored on a server (901) into a modified model (200-T2) of the application component;
a server-renderer (101-2) for generating at least one browser-increment (300-I) that corresponds to the difference between the original model (200-T1) and the modified model (200-T2) ;
a client-assembler (100-1) receiving the at least one browser-increment (300-I) from the server (901) and updating at the client (900) an original document object model component (300-T1) of a browser component with the at least one browser-increment (300-I), resulting in a modified document object model component (300-T2) that corresponds to the modified model (200-T2), wherein the original document object model component (300-T1) corresponds to the original model (200-T1); and
a client-controller (100-2) for generating the modification-request,
wherein the client-controller (100-2) is operable to store the at least one browser-increment (300-1) in a cache-memory (920-C) of the client (900) and to instruct the client-assembler (100-1) to deactivate the at least one browser-increment (300-1) in the modified document-object model resulting in a deactivated document object model component, upon receiving a deactivation-request;
wherein the client-controller (100-2) is operable to retrieve the at least one browser-increment (300-1) from the cache-memory (920-C) and to instruct the client-assembler (100-1) to reactivate the at least one browser-increment (300-1) in the deactivated document object model component upon receiving a reactivation-request.

2. The computer system (999) according to any of the claims 1, wherein the client-controller (100-2) instructs the client-assembler (100-1) to reset the original or modified document object model component (300-T1, 300-T2) upon receiving a reset-request.

3. The computer system (999) according to any of the claims 1 to 2, wherein the original model (200-T1) and the modified model (200-T2) are defined by a component class selected from the group of Java class, Java Server Pages class, servlet class, Pascal class, C class, C++ class, and Business Server Pages class.

4. The computer system (999) according to any of the claims 1 to 3, wherein the browser component is defined by a component script class selected from the group of JavaScript class, JavaApplets class and VisualBasic Script class.

5. The computer system (999) of claim 3, wherein the component class implements at least a portion of the server-controller (101-1) and the server-renderer (101-2).

6. The computer system (999) of claim 4, wherein the component script class implements at least a portion of the client-controller (100-2) and the client-assembler (100-2).

7. The computer system (999) of claim 4, wherein the component script class and the component class have identical hierarchies.

8. A client (900) in a computer system (999) for handling incremental data comprising:
a client-controller (100-2) sending a modification-request to a server-controller (101-1) of a server (901) in the computer system (999); and
a client-assembler (100-1) receiving at least one browser-increment (300-1) from the server (901) and updating an original document object model component (300-T1) that corresponds to an original model (200-T1) of an application component with the at least one browser-increment (300-1), resulting in a modified document object model component (300-T2) that corresponds to a modified model (200-T2) of the application component, wherein the server-controller (101-1) modifies the original model (200-T1) being stored on the server (901) into the modified model (200-T2); and a server-renderer (101-2) of the server (901) generates the at least one browser-increment (300-1) that corresponds to the difference between the original model (200-T1) and the modified model (200-T2)
wherein the client-controller (100-2) is operable to store the at least one browser-increment (300-l) in a cache-memory (920-C) of the client (900) and to instruct the client-assembler (100-1) to deactivate the browser-increment (300-1) in the modified document object model resulting in a deactivated document object model component, upon receiving a deactivation-request;
wherein the client-controller (100-2) is operable to retrieve the at least one browser-increment (300-1) from the cache-memory (920-C) and to instruct the client-assembler (100-1) to reactivate the at least one browser-increment (300-1) in the deactived document object model component upon receiving a reactivation-request.

9. The client (900) according to claim 8, wherein the client-controller (100-2) instructs the client-assembler (100-1) to reset the original document object model component (300-T1) upon receiving a reset-request.

10. A method (500) for handling incremental data on a client (900) of a computer system (999) comprising the steps:
sending (510) from a client-controller (100-2) a modification-request to a server-controller (101-1) of a server (901) of the computer system (999); and
receiving (520) by a client-assembler (100-1) at least one browser-increment (300-1) from the server (901) as a response to the modification request; and
updating (530) an original document object model component (300-T1) that corresponds to an original model (200-T1) of an application component with the at least one browser-increment (300-1), resulting in a modified document object model component (300-T2) that corresponds to a modified model (200-T2) of the application component, wherein the server-controller (101-1) modifies the original model (200-T1) being stored on the server (901) into the modified model (200-T2); and a server-renderer (101-2) of the server (901) generates the at least one browser-increment (300-I) that corresponds to the difference between the original model (200-T1) and the modified model (200-T2),
storing (540) the at least one browser-increment (300-I) in a cache-memory (920-C) of the client (900); and
deactivating (550) the browser-increment (300-I) in the modified document object model resulting in a deactivated document object model component, by the client-assembler (100-1) upon the client-controller (100-2) having received a deactivation-request;
retrieving (560) the at least one browser-increment (300-I) from the cache-memory (920-C); and
reactivating (570) the browser-increment (300-l) in the deactivated document object model component by the client-assembler (100-1) upon the client-controller (100-2) having received a reactivation-request.

11. A computer program product (100) comprising instructions that, when loaded into a memory (920) of a client (900), cause at least one processor (910) of the server (900) to execute the steps of claim 10.

## Patentansprüche

1. Rechner- bzw. Computersystem (999) zum Handhaben von inkrementellen Daten, umfassend:
einen Server-Controller bzw. eine Server-Steuer- bzw. -Regeleinrichtung (engl.: server-controller) (101-1) zum Empfangen einer Modifikationsanfrage von einem Client (900), um ein ursprüngliches bzw. original Modell (200-T1) einer Anwendungskomponente, welche auf einem Server (901) gespeichert ist, in ein modifiziertes Modell (200-T2) der Anwendungskomponente zu modifizieren;
einen Server-Renderer (engl.: server-renderer) (101-2) zum Generieren von wenigstens einem Browser-Inkrement (300-1), welches dem Unterschied bzw. der Differenz zwischen dem original Modell (200-T1) und dem modifizierten Modell (200-T2) entspricht;
einen Client-Assembler (engl.: client-assembler) (100-1), welcher das wenigstens eine Browser-Inkrement (300-1) von dem Server (901) erhält bzw. empfängt und an dem Client (900) eine original Dokument-Objektmodellkomponente (300-T1) einer Browser-Komponente mit dem wenigstens einen Browser-Inkrement (300-1) aktualisiert, was in einer modifizierten Dokument-Objektmodellkomponente (300-T2)
resultiert, welche dem modifizierten Modell (200-T2) entspricht, wobei die original Dokument-Objektmodellkomponente (300-T1) dem original Modell (200-T1) entspricht; und einen Client-Controller (engl.: client-controller) (100-2) zum Generieren der Modifikationsanfrage,
wobei der Client-Controller (engl.: client-controller) (100-2) betätigbar bzw. betreibbar ist, um das wenigstens eine Browser-Inkrement (300-I) in einem Cache-Speicher (920-C) des Client (900) zu speichern und um den Client-Assembler (100-1) zu instruieren, das wenigstens eine Browser-Inkrement (300-I) in dem modifizierten Dokument-Objektmodell zu deaktivieren, was in einer deaktivierten Dokument-Objektmodellkomponente nach Empfangen einer Deaktivierungsanfrage resultiert;
wobei der Client-Controller (100-2) betätigbar ist, um das wenigstens eine Browser-Inkrement (300-I) von dem Cache-Speicher (920-C) zu entnehmen bzw. abzurufen und den Client-Assembler (100-1) zu instruieren, das wenigstens eine Browser-Inkrement (300-1) in der deaktivierten Dokument-Objektmodellkomponente deaktivierten Dokuments nach bzw. bei Empfangen einer Reaktivierungsanfrage zu reaktivieren.

2. Rechnersystem (999) nach Anspruch 1, wobei der Client-Controller (100-2) den Client-Assembler (100-1) instruiert, die original oder modifizierte Dokument-Objektmodellkomponente (300-T1, 300-T2) nach bzw. bei Empfangen einer Rücksetzanfrage zurückzusetzen.

3. Rechnersystem (999) nach einem der Ansprüche 1 bis 2, wobei das original Modell (200-T1) und das modifizierte Modell (200-T2) durch eine Komponentenklasse definiert sind, die aus der Gruppe von Java Klasse, Java Server Pages Klasse, Servlet Klasse, Pascal Klasse, C Klasse, C++ Klasse und Business Server Pages Klasse gewählt ist.

4. Rechnersystem (999) nach einem der Ansprüche 1 bis 3, wobei die Browser-Komponente durch eine Komponentenskript-Klasse (engl.: component script class) definiert ist, die aus der Gruppe von JavaScript Klasse, JavaApplets Klasse und VisualBasic Script Klasse gewählt bzw. selektiert ist.

5. Rechnersystem (999) nach Anspruch 3, wobei die Komponentenklasse wenigstens einen Abschnitt des Server-Controllers (101-1) und des Server-Renderers (101-2) implementiert.

6. Rechnersystem (999) nach Anspruch 4, wobei die Komponentenskript-Klasse wenigstens einen Abschnitt des Client-Controllers (100-2) und des Client-Assemblers (100-2) implementiert.

7. Rechnersystem (999) nach Anspruch 4, wobei die Komponentenskript-Klasse und die Komponentenklasse identische Hierarchien aufweisen.

8. Client (900) in einem Rechner- bzw. Computersystem (999) zum Handhaben von inkrementellen Daten, umfassend:
einen Client-Controller bzw. eine Client-Steuer- bzw. -Regeleinrichtung (engl.: client-controller) (100-2), welcher eine Modifikationsanfrage zu einem Server-Controller bzw. eine Server-Steuer- bzw. -Regeleinrichtung (engl.: server-controller) (101-1) eines Servers (901) in dem Rechnersystem (999) sendet; und
einen Client-Assembler (engl.: client-assembler) (100-1), welcher wenigstens ein Browser-Inkrement (300-1) von dem Server (901) erhält bzw. empfängt und eine original Dokument-Objektmodellkomponente (300-T1), welche einem ursprünglichen bzw. original Modell (200-T1) einer Anwendungskomponente entspricht, mit dem wenigstens einen Browser-Inkrement (300-l) aktualisiert, was in einer modifizierten Dokument-Objektmodellkomponente (300-T2) resultiert, welche einem modifizierten Modell (200-T2) der Anwendungskomponente entspricht, wobei der Server-Controller (101-1) das original Modell (200-T1), das auf dem Server (901) gespeichert ist, in das modifizierte Modell (200-T2) modifiziert; und ein Server-Renderer (engl.: server- renderer) (101-2) des Servers (901) das wenigstens eine Browser-Inkrement (300-l) generiert bzw. erzeugt, welches dem Unterschied zwischen dem originalModell (200-T1) und dem modifizierten Modell (200-T2) entspricht,
wobei der Client-Controller (100-2) betätigbar bzw. betreibbar ist, um das wenigstens eine Browser-Inkrement (300-l) in einem Cache-Speicher (920-C) des Client (900) zu speichern und um den Client-Assembler (100-1) zu instruieren, das Browser-Inkrement (300-1) in dem modifizierten Dokument-Objektmodell zu deaktivieren, was in einer deaktivierten Dokument-Objektmodellkomponente nach bzw. bei Empfangen einer Deaktivierungsanfrage resultiert;
wobei der Client-Controller (100-2) betätigbar bzw. betreibbar ist, um das wenigstens eine Browser-Inkrement (300-l) von dem Cache-Speicher (920-C) zu entnehmen bzw. abzurufen und den Client-Assembler (100-1) zu instruieren, das wenigstens eine Browser-Inkrement (300-1) in der deaktivierten Dokument-Objektmodellkomponente nach bzw. bei Empfangen einer Reaktivierungsanfrage zu reaktivieren.

9. Client (900) nach Anspruch 8, wobei der Client-Controller (100-2) den Client-Assembler (100-1) instruiert, die original Dokument-Objektmodellkomponente (300-T1) nach bzw. bei Empfangen einer Rücksetzanfrage zurückzusetzen.

10. Verfahren (500) zum Handhaben von inkrementellen Daten auf einem Client (900) eines Rechner- bzw. Computersystems (999), umfassend die Schritte:
Senden (510) von einem Client-Controller bzw. eine Client-Steuer- bzw. - Regeleinrichtung (engl.: client-controller) (100-2) einer Modifikationsanfrage zu einem Server-Controller bzw. einer Server-Steuer- bzw. -Regeleinrichtung (server-controller) (101-1) eines Servers (901) des Rechnersystems (999); und
Empfangen (520) durch einen Client-Assembler (engl.: client-assembler) (100-1) von wenigstens einem Browser-Inkrement (300-1) von dem Server (901) als eine Antwort auf die Modifikationsanfrage; und
Aktualisieren (530) einer original Dokument-Objektmodellkomponente (300-T1), welche einem ursprünglichen bzw. original Modell (200-T1) einer Anwendungskomponente entspricht, mit dem wenigstens einen Browser-Inkrement (300-1), was in einer modifizierten Dokument-Objektmodellkomponente (300-T2) resultiert, welche einem modifizierten Modell (200-T2) der Anwendungskomponente entspricht, wobei der Server-Controller (101-1) das originalModell (200-T1), welches auf dem Server (901) gespeichert ist , in das modifizierte Modell (200-T2) modifiziert; und ein Server-Renderer (engl.: server-renderer) (101-2) des Servers (901) das wenigstens eine Browser-Inkrement (300-I) generiert, welches dem Unterschied zwischen dem original Modell (200-T1) und dem modifizierten Modell (200-T2) entspricht,
Speichern (540) des wenigstens einen Browser-Inkrements (300-l) in einem Cache-Speicher (920-C) des Client (900); und
Deaktivieren (550) des Browser-Inkrements (300-1) in dem modifizierten Dokument-Objektmodell durch den Client-Assembler (100-1) bei Empfang oder nachdem der Client Controller (100-2) eine Deaktivierungsanfrage empfangen hat, was in einer deaktivierten Dokument-Objektmodellkomponente resultiert.
Entnehmen bzw. Abfragen (560) des wenigstens einen Browser-Inkrements (300-1) von dem Cache-Speicher (920-C); und
Reaktivieren (570) des Browser-Inkrements (300-1) in der deaktivierten Dokument-Objektmodellkomponente durch den Client-Assembler (100-1), bei Empfang bzw. nachdem der Client-Controller (100-2) eine Reaktivierungsanfrage empfangen hat.

11. Rechner- bzw. Computerprogrammprodukt (100), umfassend Instruktionen, welche, wenn sie in einen Speicher (920) eines Client (900) geladen sind, wenigstens einen Prozessor (910) des Servers (900) veranlassen, die Schritte von Anspruch 10 auszuführen.

## Revendications

1. Système informatique (999) pour traiter des données incrémentielles comportant :
un contrôleur-serveur (101-1) pour recevoir une demande de modification d'un client (900) afin de modifier un modèle original (200-T1) d'un composant d'application qui est mémorisé sur un serveur (901) en un modèle modifié (200-T2) du composant d'application ;
un dispositif de rendu-serveur (101-2) pour générer au moins un incrément-navigateur (300-1) qui correspond à la différence entre le modèle original (200-T1) et le modèle modifié (200-T2) ;
un assembleur-client (100-1) recevant le au moins un incrément-navigateur (300-1) du serveur (901) et mettant à jour dans le client (900) un composant de modèle objet de document original (300-T1) d'un composant de navigateur avec le au moins un incrément-navigateur (300-I), résultant en un composant de modèle objet de document modifié (300-T2) qui correspond au modèle modifié (200-T2), le composant de modèle objet de document original (300-T1) correspondant au modèle original (200-T1), et un contrôleur-client (100-2) pour générer la demande de modification ;
dans lequel le contrôleur-client (100-2) est opérable pour mémoriser le au moins un incrément-navigateur (300-1) dans une mémoire cache (920-C) du client (900) et pour ordonner à l'assembleur-client (100-1) de désactiver le au moins un incrément-navigateur (300-I) dans le modèle objet de document modifié résultant en un composant de modèle objet de document désactivé, à la réception d'une demande de désactivation ;
dans lequel le contrôleur-client (100-2) est opérable pour récupérer le au moins un incrément-navigateur (300-I) depuis la mémoire cache (920-C) et pour ordonner à l'assembleur-client (100-1) de réactiver le au moins un incrément-navigateur (300-1) dans le composant de modèle objet de document désactivé lors de la réception d'une demande de réactivation.

2. Système informatique (999) selon la revendication 1, dans lequel le contrôleur-client (100-2) ordonne à l'assembleur-client (100-1) de réinitialiser le composant de modèle objet de document original ou modifié (300-T1, 300-T2) lors de la réception d'une demande de réinitialisation.

3. Système informatique (999) selon l'une quelconque des revendications 1 à 2, dans lequel le modèle original (200-T1) et le modèle modifié (200-T2) sont définis par une classe de composant sélectionnée parmi le groupe de classe Java, de classe de Pages de Serveur Java, de classe servlet, de classe Pascal, de classe C, de classe C++, et de classe de Pages de Serveur d'Entreprise.

4. Système informatique (999) selon l'une quelconque des revendications 1 à 3, dans lequel le composant de navigateur est défini par une classe de script de composant sélectionnée parmi le groupe de classe Java Script, de classe Java Applets et de classe de Script VisualBasic.

5. Système informatique (999) selon la revendication 3, dans lequel la classe de composant implémente au moins une partie du contrôleur-serveur (100-2) et du dispositif de rendu-serveur (101-2).

6. Système informatique (999) selon la revendication 4, dans lequel la classe de script de composant implémente au moins une partie du contrôleur-client (100-2) et du dispositif d'assemblage-client (100-2).

7. Système informatique (999) selon la revendication (4), dans lequel la classe de script de composant et la classe de composant ont des hiérarchies identiques.

8. Client (900) dans un système informatique (999) pour traiter des données incrémentielles comportant :
un contrôleur-client (100-2) envoyant une demande de modification à un contrôleur-serveur (101-1) d'un serveur (901) dans le système informatique (999) ; et
un dispositif d'assemblage-client (100-1) recevant au moins un incrément-navigateur (300-1) du serveur (901) et mettant à jour un composant de modèle objet de document original (300-T1) qui correspond à un modèle original (200-T1) d'un composant d'application avec le au moins un incrément-navigateur (300-1), résultant en un composant de modèle objet de document modifié (300-T2) qui correspond à un modèle modifié (200-T2) du composant d'application, dans lequel le contrôleur-serveur (101-1) modifie le modèle original (200-T1) étant mémorisé sur le serveur (901) en un modèle modifié (200-T2), et un dispositif de rendu-serveur (101-2) du serveur (901) génère le au moins un incrément-navigateur (900-1) qui correspond à la différence entre le modèle original (200-T2) et le modèle modifié ;
dans lequel le contrôleur-client (100-T2) est opérable pour mémoriser le au moins un incrément-navigateur (300-1) dans une mémoire cache (920-C) du client (900) et pour ordonner à l'assembleur-client (100-1) de désactiver l'incrément-navigateur (300-1) dans le modèle d'objet de document modifié résultant en un composant de modèle objet de document désactivé, à la réception d'une demande de désactivation ;
dans lequel le contrôleur-client (100-2) est opérable pour récupérer le au moins un incrément-navigateur (300-1) depuis la mémoire cache (920-C) et pour ordonner à l'assembleur-client (100-1) de réactiver le au moins un incrément-navigateur (300-1) dans le composant de modèle objet de document désactivé lors de la réception d'une demande de réactivation.

9. Client (900) selon la revendication 8, dans lequel le contrôleur-client (100-2) ordonne à l'assembleur-client (100-1) de réinitialiser le composant de modèle objet de document original (300-T1) lors de la réception d'une demande de réinitialisation.

10. Procédé (500) pour traiter des données incrémentielles sur un client (900) d'un système informatique (999) comportant les étapes suivantes :
envoyer (510) depuis un contrôleur-client (100-2) une demande de modification à un contrôleur-serveur (101-1) d'un serveur (901) du système informatique (999) ; et
recevoir (520) par l'intermédiaire d'un assembleur-client (100-1) au moins un incrément-navigateur (300-I) du serveur (901) en tant que réponse à la demande de modification ; et
mettre à jour (530) un composant de modèle objet de document original (300-T1) qui correspond à un modèle original (200-T1) d'un composant d'application avec le au moins un incrément-navigateur (300-I), résultant en un composant de modèle objet de document modifié (300-T2) qui correspond à un modèle modifié (200-T2) du composant d'application, dans lequel le contrôleur-serveur (101-1) modifie le modèle original (200-T1) étant mémorisé sur le serveur (901) en un modèle modifié (200-T2) ; et un dispositif de rendu-serveur (100-T2) du serveur (901) génère le au moins un incrément-navigateur (300-1) qui correspond à la différence entre le modèle original (200-T1) et le modèle modifié (200-T2) ;
mémoriser (540) le au moins un incrément-navigateur (300-1) dans une mémoire cache (920-C) du client (900) ; et
désactiver (550) l'incrément-navigateur (300-1) dans le modèle objet de document modifié résultant en un composant de modèle objet de document désactivé, par l'assembleur-client (100-1) sur le contrôleur-client (100-2) ayant reçu une demande de désactivation ;
récupérer (560) le au moins un incrément-navigateur (300-1) depuis la mémoire cache (920-C) ;
réactiver (570) l'incrément-navigateur (300-1) dans le composant de modèle objet de document désactivé par l'assembleur-client (100-1) sur le contrôleur-client (100-2) ayant reçu une demande de réactivation.

11. Produit de programme informatique (101) comportant des instructions lesquelles, lorsque chargées dans une mémoire (920) d'un client (900), font exécuter les étapes de la revendication 10 à au moins un processeur (910) du serveur (900).
